# EUROPÄISCHE PATENTANMELDUNG

(11) **EP 0 691 567 A1**
(43) Veröffentlichungstag der Anmeldung: **10.01.1996**
(21) Anmeldenummer: 95110701.0
(22) Anmeldetag: 10.07.1995
(51) Int. Cl.: G03B 21/06

(54) **Realbild-Auflichtprojektor**

(30) Priorität: 09.07.1994 DE 9411145 U
(71) Anmelder: ProCent Patent- und Verwaltungs AG, CH-8034 Zürich (CH)
(72) Erfinder: Behr, Karl-Günter, D-35444 Biebertal (DE)
(74) Vertreter: Kossobutzki, Walter, Dipl.-Ing.(FH)

(57) **Zusammenfassung**

Die Erfindung bezieht sich auf einen Realbild-Auflichtprojektor, bestehend aus einem Gehäuse mit einer ebenen durchsichtigen Objektauflage zum Auflegen des Objekts und zum Durchlassen des von mindestens einer Lichtquelle ausgehenden Lichtes, mit einer Projektionslinse zum Zusammenführen der vom Objekt ausgehenden Reflektionsstrahlen zur Erzeugung eines Objektbildes auf einer Bildwand außerhalb des Projektors, und gegebenenfalls mit einem Hilfsspiegel.

Um bei geringen räumlichen Abmessungen eine gleichmäßige, optimale Ausleuchtung des Objekts zu erreichen und störendes Reflexlicht zu vermeiden, ist die Objektauflage (2) an ihrer dem Objekt (4) abgewandten Seite zumindest in einem vorgegebenen Bereich (10) mit einer Vielzahl Mikroprismen (11) versehen.

## Beschreibung

Die Erfindung bezieht sich auf einen Realbild-Auflichtprojektor, bestehend aus einem Gehäuse mit einer ebenen durchsichtigen Objektauflage zum Auflegen des Objekts und zum Durchlassen des von mindestens einer Lichtquelle ausgehenden Lichtes, mit einer Projektionslinse zum Zusammenführen der vom Objekt ausgehenden Reflektionsstrahlen zur Erzeugung eines Objektbildes auf einer Bildwand außerhalb des Projektors, und gegebenenfalls mit einem Hilfsspiegel.

Derartige Auflicht-Projektoren, auch Episkope genannt, dienen zur Darstellung eines Realbildes eines Objektes, beispielsweise eines Dokumentes, eines Fotos oder dgl., unter Benutzung der von einer Lichtquelle abgegebenen, über einen Reflektorspiegel geführten, unregelmäßig vom Objekt reflektierten und auf eine Bildwand und eine Projektionslinse geworfenen Lichtstrahlen.

Bei den üblicherweise eingesetzten Realbild-Projektoren, bei denen ein Objekt auf einer aus Glas oder ähnlichem Werkstoff bestehenen Objektauflage abgelegt und direkt von mindestens einer Lichtquelle bestrahlt wird, sind auch noch Hilfsspiegel zum Reflektieren des vom Objekt zurückgeworfenen Lichtes sowie die Projektionslinse in einem Gehäuse vorgesehen. Dabei muß die Lichtquelle in einer solchen Lage angeordnet werden, daß sichergestellt ist, daß die von der Lichtquelle ausgehenden und vom Objekt sowie von der Objektauflage gemäß dem Objekt sowie von der Objektauflage gemäß den Reflektionsgesetzen regelmäßig reflektierten Lichtstrahlen nicht über den Hilfsspiegel auf die Projektionslinse fallen, um eine Störung in der Auflösung des aufgrund des regelmäßig reflektierten Lichtes ausgebildeten Bildes zu vermeiden. Ferner muß die Lichtquelle außerhalb des Erfassungswinkels der Projetionslinse angebracht und auch weit vom Objekttisch entfernt angeordnet sein, damit dieser gleichmäßig ausgeleuchtet wird.

Zur Vermeidung dieser Nachteile sind Realbild-Auflichtprojektoren bekannt, bei denen seitlich neben der Projektionslinse Hilfsspiegel parallel zur optischen Achse angeordnet sind. Diese Hilfsspiegel dienen dazu, daß von der neben der Projektionslinse angeordneten Lichtquelle abgestrahlte Licht schräg auf die Objektauflage strahlen zu lassen, um zu vermeiden, daß diese Strahlen infolge des Reflektionsgesetzes durch Spiegelung an der Objektauflage in die Projektionslinse gelangen und sich als helle Flecken störend auf der Bildwand abbilden und die Abbildungsqualität beeinträchtigen. Bei einer solchen Ausführung eines Realbild-Auflichtprojektors wird die Objektauflage sehr ungleichförmig ausgeleuchtet, weil die seitlich angebrachte Lichtquelle, es können auch mehrere Lichtquellen sein, unsymmetrich zur Objektauflage angeordnet ist. Weiterhin führt das schräg auf die Objektauflage strahlende Licht zu einer erheblich niedrigeren, diffusen Lichtreflektion vom Objekt zur Projektionslinse wie dies dann der Fall ist, wenn die Lichtstrahlen nahezu senkrecht auf das Objekt fallen und mit größerem Reflektionslicht zur Projektionslinse abgelenkt werden.

Der Erfindung liegt deshalb die Aufgabe zugrunde, einen Realbild-Auflichtprojektor zu schaffen, bei dem bei geringen räumlichen Abmessungen eine gleichmäßige, optimale Ausleuchtung des Objekts erreicht und störendes Reflexlicht vermieden wird.

Zur Lösung dieser Aufgabe wird gemäß der Erfindung bei einem Realbild-Auflichtprojektor der eingangs beschriebenen Gattung vorgeschlagen, daß die Objektauflage an ihrer dem Objekt abgewandten Seite zumindest in einem vorgegebenen Bereich mit einer Vielzahl Mikroprismen versehen ist.

Durch eine solche Ausgestaltung kann die Lichtquelle - es können auch mehrere Lichtquellen sein - in der Nähe der Projektionslinse angeordnet werden, was eine weitgehend gleichmäßige optimale Ausleuchtung der Objektauflage und damit des Objektes sicherstellt. Die reflektierenden Störlichtstrahlen werden neben den Eintrittsbereich der Projektionslinse abgelenkt, so daß auf der Bildwand störendes Reflexlicht vermieden wird. Dies wird auch dann erreicht, wenn zwischen der Objektauflage und der Projektionslinse ein Hilfsspiegel angeordnet ist.

Weitere Merkmale eines Realbild-Auflichtprojektors gemäß der Erfindung sind in den Ansprüchen 2-8 offenbart.

Die Erfindung wird nachfolgend anhand eines in einer Zeichnung in vereinfachter Weise dargestellten Ausführungsbeispieles näher erläutert. Dabei zeigen
- Fig. 1: die wesentlichen Teile eines Realbild-Auflichtprojektors gemäß der Erfindung,
- Fig. 2: eine vergrößerte Darstellung der Objektauflage gemäß Fig. 1,
- Fig. 3: eine Draufsicht auf die Objektauflage der Fig. 1 mit eingezeichneten Objektiv und
- Fig. 4: eine der Fig. 1 entsprechende, den bisherigen Stand der Technik wiedergebene Anordnung.

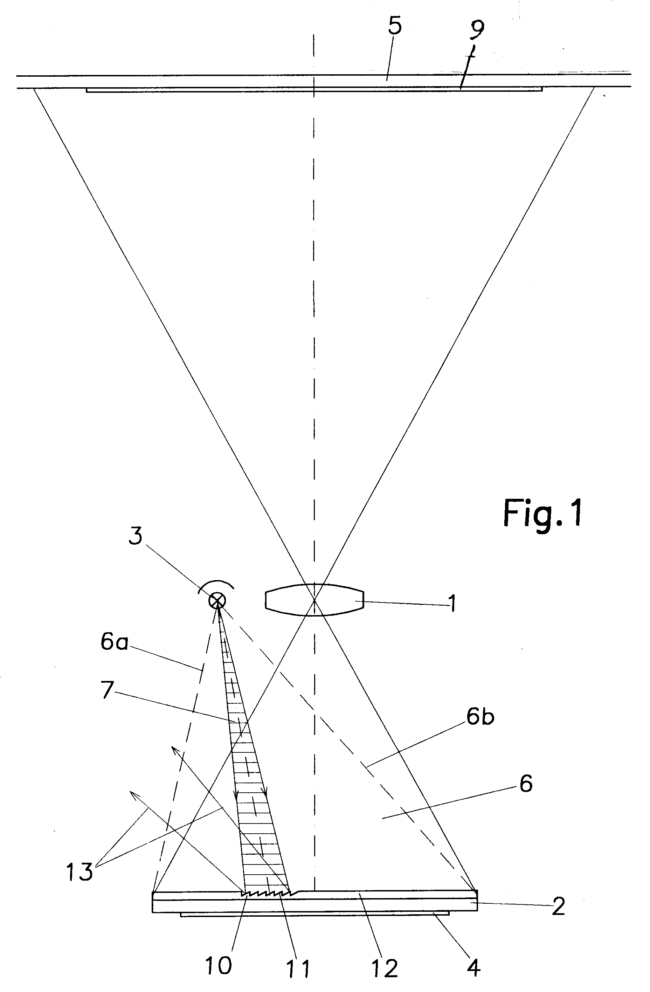

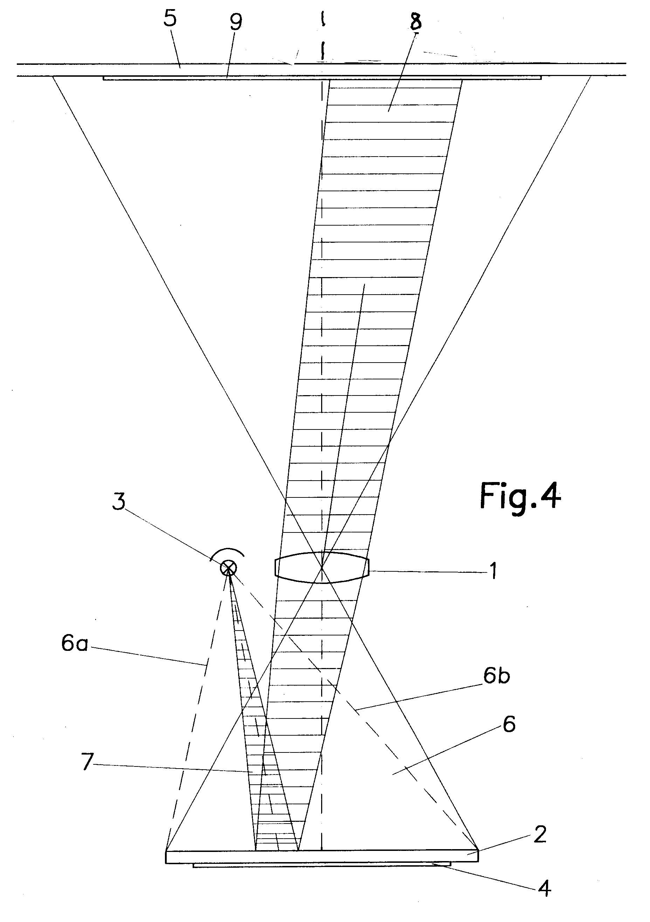

In den Fign. 1 und 4 der Zeichnung sind von einem Realbild-Auflichtprojektor nur die Projektionslinse 1, die Objektauflage 2 und die Lichtquelle 3 gezeigt, die gegebenenfalls zusammen mit einem Hilfsspiegel in einem nicht dargestellten Gehäuse angeordnet sind. Der Realbild-Auflichtprojektor dient zur Projektion eines Objektes 4, welches auch als Projektionsvorlage bezeichnet wird, auf eine Projektionswand 5. Dazu wird das Objekt 4 auf die in der Zeichnung unten befindliche Seite der Objektauflage 2 gelegt, die aus Glas oder einem ähnlichen Werkstoff besteht. Die Lichtquelle 3, es können auch mehrere Lichtquellen 3 sein, ist so neben der Projektionslinse 1 angeordnet, daß die durch ein Strahlenbündel 6 mit den Randstrahlen 6a,6b gekennzeichneten Beleuchtungsstrahlen zur Erzielung einer möglichst gleichmäßigen Ausleuchtung annähernd symmetrisch zur Objektauflage 2 verlaufen, so daß zwischen den Randstrahlen 6a,6b nur geringe Längenunterschiede bestehen.

Bei der Ausgestaltung gemäß dem Stand der Technik in Figur 4 wird nun von der Lichtquelle 3 im Strahlenbündel 6 ein Strahlenbündel 7 abgestrahlt, das durch die obere und untere Fläche der Objektauflage 2 über den gesamten Querschnitt der Projektionslinse 1 als Lichtfleck 8 abgelenkt wird, der das Projektionsbild 9 des Objektes 4 störend beeinflußt. Dieser nachteilige Effekt ist auch dann vorhanden, wenn, wie in der Zeichnung nicht dargestellt, zwischen dem Objekt 4 und der Projektionslinse 1 ein Hilfsspiegel vorhanden ist.

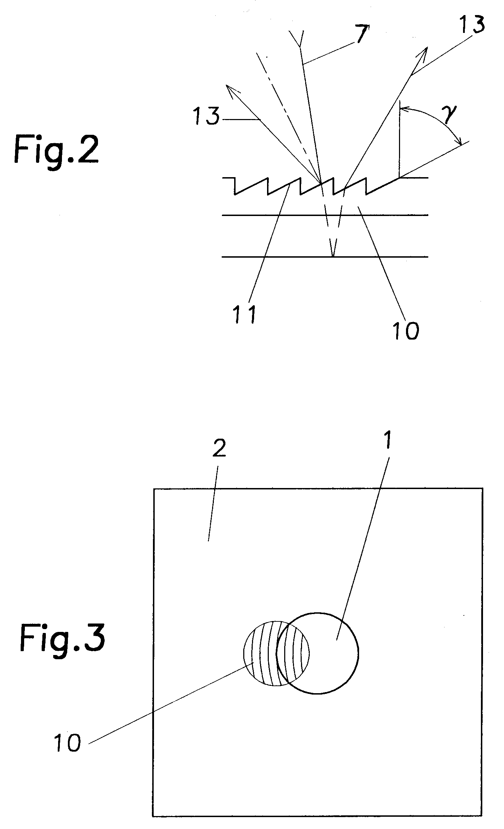

Um diesen störenden Einfluß zu vermeiden, ist gemäß der Ausgestaltung der Erfindung in der Fig. 1 der Zeichnung auf der Objektauflage 2 ein Bereich 10 vorgesehen, in dem mehrere Mikroprismen 11 angeordnet sind. Die Mikroprismen 11 werden in diesem Ausführungsbeispiel durch eine als Stufenlinse ausgebildete Prismenscheibe 12 gebildet, die auf der Objektauflage 2 angeordnet ist. Der Flanken- bzw. Neigungswinkel " " (Fig. 2) ist dabei so gewählt, daß auf der gesamten Fläche der Objektauflage 2 keine reflektierenden Lichtstrahlen durch Reflexlicht an den Flanken der Mikroprismen 11 und der ebenen Objektauflage 2 zur Projektionslinse 1 gelangen.

Aus der Fig. 1 der Zeichnung geht nun sehr deutlich hervor, daß dann das von der Lichtquelle 3 ausgehende Strahlenbündel 7 an der Oberfläche der Objektauflage 2 so abgelenkt wird, daß die Reflektionsstrahlen 13, auch von der Unterseite der Objektauflage 2 gemäß Fig. 2, in einen Bereich außerhalb der Projektionslinse 1 abgelenkt werden. Damit können diese Lichtstrahlen nicht mehr als störender Lichtfleck auf die Projektionswand 5 gelangen. Durch diese Stufenlinsenwirkung wird jedoch eine Verbesserung der Qualität des Projektionsbildes 9 auf der Projektionswand 5 erreicht.

Je nach Anzahl der verwendeten Lichtquellen 3 können auf der Objektauflage 2 entsprechend viele Bereiche 10 mit den Mikroprismen 11 in einer solchen Größe (vergl. Fig. 3) angeordnet sein, daß die Reflektionsstrahlen 13 nicht mehr zur Projektionslinse 1 gelangen. Dies bedeutet, daß von der Größe und der Lage der Lichtquelle 3 und der Projektionslinse 1 die Größe des Bereiches 10 bestimmt wird. Es ist deshalb vorteilhaft, wenn sich der Bereich 10 mit den Mikroprismen 11 über die gesamte Fläche der Objektauflage 2 erstreckt, so daß von keiner Stelle der Objektauflage 2 aus störende Reflexstrahlen in die Projektionslinse 1 gelangen.

Eine praktische Ausführungsform dieser Prismenanordnung ergibt sich dann, wenn auf der Oberseite der Objektauflage 2, also an der dem Objekt 4 abgewandten Seite der Objektauflage 2, eine dünne Kunststoffplatte aus transparentem Werkstoff aufkaschiert ist, welche mindestens in dem angegebenen Bereich 10 - es können auch mehrere Bereiche 10 sein - die erforderlichen Mikroprismen 11 trägt. Grundsätzlich ist es auch möglich, die Prismenscheibe 12 in einem Abstand von der Objektauflage 2 anzuordnen. Dies bringt jedoch den Nachteil mit sich, daß die Lichtstrahlen zur Beleuchtung des Objektes 4 zwei Glas-Luftübergänge zusätzlich durchdringen müssen, was ein dunkleres Projektionsbild 9 ergibt. Bedarfsweise ist es auch möglich, die Mikroprismen 11 bzw. die Bereiche 10 mit den Mikroprismen 11 einstückig mit der Objektauflage 2 auszubilden.

## Patentansprüche

1. Realbild-Auflichtprojektor, bestehend aus einem Gehäuse mit einer ebenen durchsichtigen Objektauflage zum Auflegen des Objekts und zum Durchlassen des von mindestens einer Lichtquelle ausgehenden Lichtes, mit einer Projektionslinse zum Zusammenführen der vom Objekt ausgehenden Reflektionsstrahlen zur Erzeugung eines Objektbildes auf einer Bildwand außerhalb des Projektors, und gegebenenfalls mit einem Hilfsspiegel,
dadurch gekennzeichnet,
daß die Objektauflage (2) an ihrer dem Objekt (4) abgewandten Seite zumindest in einem vorgegebenen Bereich (10) mit einer Vielzahl Mikroprismen (11) versehen ist.

2. Projektor nach Anspruch 1,
dadurch gekennzeichnet,
daß die Mikroprismen (11) einen Flankenwinkel " " aufweisen, der keine reflektierenden Lichtstrahlen durch Reflexlicht an den Prismenflanken und an der ebenen Objektauflage (2) durch die Projektionslinse (1) gelangen läßt.

3. Projektor nach Anspruch 1 oder 2 ,
dadurch gekennzeichnet,
daß die Mikroprismen (11) nur in dem bzw. den Bereich(en) (10) der Objektauflage (2) ausgebildet sind, in denen die störenden Reflektionsstrahlen vermieden werden sollen.

4. Projektor nach mindestens einem der Ansprüche 1-3,
dadurch gekennzeichnet,
daß die Mikroprismen (11) einstückig mit der Objektauflage (2) ausgebildet sind.

5. Projektor nach mindestens einem der Ansprüche 1-3,
dadurch gekennzeichnet,
daß die Mikroprismen (11) als Zusatzelement über der Objektauflage (2) angeordnet sind.

6. Projektor nach Anspruch 5,
dadurch gekennzeichnet,
daß die Mikroprismen (11) fest mit der Objektauflage (2) verbunden sind.

7. Projektor nach mindestens einem der Ansprüche 1 oder 6,
dadurch gekennzeichnet,
daß der mit einer Vielzahl von Mikroprismen (11) versehene Bereich (10) der Objektauflage (2) durch mindestens eine Prismenscheibe (12) gebildet ist.
